(19) Europäisches Patentamt
European Patent Office
Office européen des brevets

(11) EP 2 812 291 B1

(12) EUROPÄISCHE PATENTSCHRIFT

(45) Veröffentlichungstag und Bekanntmachung des Hinweises auf die Patenterteilung:
**21.09.2016 Patentblatt 2016/38**

(21) Anmeldenummer: **13702034.3**

(22) Anmeldetag: **30.01.2013**

(51) Int Cl.:
***C04B 24/26*** (2006.01) ***C04B 40/00*** (2006.01)

(86) Internationale Anmeldenummer:
**PCT/EP2013/051734**

(87) Internationale Veröffentlichungsnummer:
**WO 2013/117465 (15.08.2013 Gazette 2013/33)**

(54) **WÄSSRIGE DISPERSION**

AQUEOUS DISPERSION

DISPERSION AQUEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2012 EP 12154509**

(43) Veröffentlichungstag der Anmeldung:
**17.12.2014 Patentblatt 2014/51**

(73) Patentinhaber: **BASF SE**
**67056 Ludwigshafen am Rhein (DE)**

(72) Erfinder:
- **MORARU, Bogdan**
**Charlotte, NC 28277 (US)**
- **SCHMIDT, Kristin**
**36433 Bad Salzungen (DE)**

(74) Vertreter: **BASF IP Association**
**BASF SE**
**ZRX-C6**
**67056 Ludwigshafen (DE)**

(56) Entgegenhaltungen:
**WO-A1-2010/026155 WO-A1-2011/131904**
**US-A1- 2011 054 081**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 812 291 B1

## Beschreibung

Gegenstand der vorliegenden Erfindung ist eine zementfreie wässrige Dispersion, enthaltend in dispergierter Form Teilchen eines Polymerisats P und Teilchen eines Calcium-Silikat-Hydrates, wobei
das Polymerisat P einen zahlenmittleren Teilchendurchmesser ≥ 10 und ≤ 1000 nm und eine Glasübergangstemperatur im Bereich ≥ -55 und ≤ 30 °C aufweist und in einpolymerisierter Form aufgebaut ist aus

| | |
|---|---|
| ≥ 0,1 und ≤ 10 Gew.-% | wenigstens eines Hydroxyalkylacrylats, eines Hydroxyalkylmethacrylats und/oder eines Amids einer α,β-monoethylenisch ungesättigten $C_3$- bis $C_6$-Mono- oder $C_4$- bis $C_6$-Dicarbonsäure (Monomere A), |
| ≥ 0 und ≤ 0,5 Gew.-% | wenigstens einer α,β-monoethylenisch ungesättigten $C_3$- bis $C_6$-Mono- oder $C_4$- bis $C_6$-Dicarbonsäure (Monomere B), |
| ≥ 0 und ≤ 10 Gew.-% | Methylmethacrylat (Monomer C), und |
| ≥ 90 und ≤ 99,9 Gew.-% | wenigstens eines weiteren ethylenisch ungesättigten Monomeren, welches sich von den Monomeren A bis C unterscheidet (Monomere D), |

wobei sich die Mengen der Monomeren A bis D auf 100 Gew.-% aufsummieren, und wobei
das Calcium-Silikat-Hydrat einen gewichtsmittleren Teilchendurchmesser ≥ 0,1 und ≤ 100 nm aufweist.

Gegenstand der vorliegenden Erfindung sind ferner ein Verfahren zur Herstellung der vorgenannten zementfreien wässrigen Dispersion, die Verwendung der zementfreien wässrigen Dispersion als Additiv in hydraulisch abbindenden Massen sowie hydraulisch abbindende Massen enthaltend die vorgenannte zementfreie wässrige Dispersion.

Im Rahmen der vorliegenden Erfindung werden unter hydraulisch abbindenden Massen pulverförmige anorganische Bindemittel verstanden, welche in der Regel als Zuschlagsstoffe dienende Sande, Kiese, gebrochene Gesteine oder sonstige Füllstoffe, wie beispielsweise natürliche oder synthetische Fasern enthalten und welche durch Anrühren mit Wasser in ihre gebrauchsfertige Form, sogenannte Mörtel oder Betone, überführt werden, wobei sich diese beim sich selbst Überlassen an der Luft oder teilweise auch unter Wasser als Funktion mit der Zeit steinartig verfestigen. Derartige hydraulisch abbindende Massen, wie gebrannter Kalk oder Gips sowie insbesondere Zemente (siehe hierzu EN 197-1), wie Portlandzemente, Weißzemente, Thurament, Celitement sowie Zemente, welchen beispielsweise Hüttensand, Flugasche, Silikastaub, Metakaolin, natürliche Puzzolane oder gebrannte Ölschiefer zugemischt wurde, sind dem Fachmann geläufig.

Um die mechanischen Eigenschaften der zu verarbeitenden Mörtel und Betone bzw. der daraus erhaltenen verfestigten bzw. abgebundenen Massen (beispielsweise Biegezugfestigkeit, Haftung auf Untergründen, Flexibilität) zu verbessern, werden den Mörteln und Betonen feinteilige Polymerisate (zahlenmittlerer Teilchendurchmesser ≥ 10 und ≤ 1000 nm) in Form wässrige Polymerisatdispersionen oder der daraus zugänglichen Polymerisatpulver zugemischt. Nachteilig an diesen feinteiligen Polymerisaten ist, dass sie in der Regel eine verzögernde Wirkung auf das Abbindeverhalten (= steinartiges Verfestigen) der Mörtel und Betone zeigen.

Insbesondere bei Mörteln oder Betonen auf Basis von zementären Systemen ist jedoch ein rasches Abbinden und eine hohe sogenannte Frühfestigkeit erforderlich, weswegen den Beton- oder Mörtelmischungen sogenannte Beschleuniger, wie beispielsweise Calciumformiat, Calciumchlorid oder Lithiumcarbonat zugemischt werden. Problematisch an den genannten bekannten Beschleunigern ist, dass sie Nachteile, beispielsweise hinsichtlich Korrosionsbeständigkeit stahlarmierter Betone oder Ausbildung von Ausblühungen aufweisen. Ein weiterer Nachteil ist die relativ hohe Einsatzmenge der bekannten Beschleuniger.

Zur Erzielung eines noch rascheren Abbindeverhaltens und noch höheren Frühfestigkeiten bei gleichzeitig konstanten Endfestigkeiten von Beton- oder Mörtelmischungen, bei darüber hinaus noch deutlich reduzierten Einsatzstoffmengen, werden gegenwärtig Dispersionen von feinteiligen Calcium-Silikat-Hydraten eingesetzt. Solche Dispersionen feinteiliger Calcium-Silikat-Hydrate und deren Herstellung werden beispielsweise in WO 2010/26155, WO 2011/26720, WO 2011/26723 sowie der nicht vorveröffentlichten Euro-PCT-Anmeldung, basierend auf der europäischen Prioritätsanmeldung mit der Anmeldenummer 11163464.8 offenbart. Nachteilig an diesen Dispersionen feinteiliger Calcium-Silikat-Hydrate ist, dass sie bei ihrer Lagerung zur Agglomeration neigen, wobei ihre beschleunigende Wirkung beim Abbinden der Mörtel und Betone nachlässt oder sogar vollständig verloren geht. Um die Agglomeration der wässrigen Dispersionen feinteiliger Calcium-Silikat-Hydrate zu reduzieren oder gänzlich zu unterbinden, müssen den wässrigen Dispersionen feinteiliger Calcium-Silikat-Hydrate Stabilisatoren und/oder Verflüssiger zugemischt werden. Die so hergestellten bzw. stabilisierten wässrigen Dispersionen feinteiliger Calcium-Silikat-Hydrate werden den Beton- oder Mörtelmischungen als separate Komponente zugemischt.

Möchte der Fachmann die oben genannten Vorteile der feinteiligen Polymerisate mit der beschleunigenden Wirkung der feinteiligen Calcium-Silikat-Hydrate kombinieren, so ist er gezwungen, diese bei der Mörtel- bzw. Betonherstellung in Form von zwei separate Komponenten einzusetzen bzw. zuzumischen. Allerdings werden vom Fachmann

"spezifische Eintopfsysteme" wegen ihrer einfacheren Lagerung (ein anstelle von zwei Lagertanks) und Handhabung (insbesondere Mengenmessung und Dosierung) bevorzugt.

Eigene Untersuchungen zeigten jedoch, dass die Mischungen gängiger wässriger Dispersionen von Polymerisaten mit einem zahlenmittleren Teilchendurchmesser ≥ 10 und ≤ 1000 nm und einer Glasübergangstemperatur im Bereich ≥ -55 und ≤ 30 °C und Calcium-Silikat-Hydraten mit einen gewichtsmittleren Teilchendurchmesser ≥ 0,1 und ≤ 100 nm infolge von Gelbildung, Koagulation oder Anstieg der Viskosität keine ausreichende Lagerstabilität aufwiesen. Darüber hinaus verlieren solche Mischungen die beschleunigende Wirkung bei der Aushärtung der Mörtel und Betone.

Aufgabe der vorliegenden Erfindung war es daher, zementfreie wässrige Dispersionen, enthaltend in dispergierter Form Polymerisate mit einem zahlenmittleren Teilchendurchmesser ≥ 10 und ≤ 1000 nm und einer Glasübergangstemperatur im Bereich ≥ -55 und ≤ 30 °C und Calcium-Silikat-Hydrate mit einen gewichtsmittleren Teilchendurchmesser ≥ 0,1 und ≤ 100 nm bereitzustellen, welche bei 23 °C eine Lagerstabilität ≥ 28 Tage aufweisen.

Die Aufgabe wird durch die eingangs definierten zementfreien wässrigen Dispersionen gelöst.

Erfindungswesentlich ist die Verwendung einer wässrigen Dispersion eines Polymerisats P, welches einen zahlenmittleren Teilchendurchmesser ≥ 10 und ≤ 1000 nm und eine Glasübergangstemperatur im Bereich ≥ -55 und ≤ 30 °C aufweist und in einpolymerisierter Form aufgebaut ist aus

| | |
|---|---|
| ≥ 0,1 und ≤ 10 Gew.-% | wenigstens eines Monomeren A, |
| ≥ 0 und ≤ 0,5 Gew.-% | wenigstens eines Monomeren B, |
| ≥ 0 und ≤ 10 Gew.-% | Monomer C, und |
| ≥ 90 und ≤ 99,9 Gew.-% | wenigstens eines Monomeren D, |

und mit besonderem Vorteil aufgebaut ist aus

| | |
|---|---|
| ≥ 2,0 und ≤ 8,0 Gew.-% | wenigstens eines Monomeren A, |
| ≥ 0 und ≤ 0,2 Gew.-% | wenigstens eines Monomeren B, |
| ≥ 0 und ≤ 2,0 Gew.-% | Monomer C, und |
| ≥ 92 und ≤ 98 Gew.-% | wenigstens eines Monomeren D, |

wobei sich die Mengen der Monomeren A bis D jeweils auf 100 Gew.-% (Gesamtmonomerenmenge) aufsummieren.

Als Monomere A können prinzipiell alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder - methacrylate eingesetzt werden, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere A angesehen werden sollen. Mit Vorteil ist das wenigstens eine Monomere A ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat. Insbesondere vorteilhaft wird 2-Hydroxyethylacrylat, 2-Hydroxyethylmethacrylat, 2-Hydroxypropylacrylat, 2-Hydroxypropylmethacrylat, 3-Hydroxypropylacrylat und/oder 3-Hydroxypropylmethacrylat eingesetzt, wobei 2-Hydroxyethylacrylat und/oder 2-Hydroxyethylmethacrylat besonders bevorzugt sind.

Als Monomere A kommen ebenfalls alle α,β-monoethylenisch ungesättigten $C_3$- bis $C_6$-Mono- oder $C_4$- bis $C_6$-Dicarbonsäureamide in Betracht. Ebenfalls zu den Monomeren A zählen die vorgenannten Verbindungen, deren Carbonsäureamidgruppe mit einer Alkyl- oder einer Methylolgruppe substituiert ist. Beispiele für derartige Monomere A sind die Amide bzw. Diamide der α,β-monoethylenisch ungesättigten $C_3$- bis $C_6$-, bevorzugt $C_3$- oder $C_4$-Mono- oder $C_4$- bis $C_6$-Dicarbonsäuren wie beispielsweise Acrylamid, Methacrylamid, Ethylacrylsäureamid, Itaconsäure-mono- oder diamid, Allylessigsäureamid, Crotonsäureamid, Vinylessigsäureamid, Fumarsäure-mono- oder diamid, Maleinsäure-mono- oder diamid sowie 2-Methylmaleinsäure-mono- oder diamid. Beispiele für α,β-monoethylenisch ungesättigte $C_3$- bis $C_6$-Mono- oder $C_4$- bis $C_6$-Dicarbonsäureamide, deren Carbonsäureamidgruppe mit einer Alkyl- oder einer Methylolgruppe substituiert sind, sind N-Alkylacrylamide- und -methacrylamide, wie beispielsweise N-tert.-Butylacrylamid und -methacrylamid, N-Methylacrylamid und -methacrylamid sowie N-Methylolacrylamid und N-Methylolmethacrylamid. Bevorzugte amidische Monomere A sind Acrylamid und/oder Methacrylamid.

Als Monomere A besonders bevorzugt sind daher 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, Acrylamid und/oder Methacrylamid.

Das erfindungsgemäß eingesetzte Polymerisat P enthält ≥ 0,1 und ≤ 10 Gew.-%, bevorzugt ≥ 2,0 und ≤ 8,0 Gew.-% und insbesondere bevorzugt ≥ 3,0 und ≤ 6,0 Gew.-% an Monomeren A in einpolymerisierter Form.

Als Monomere B kommen α,β-monoethylenisch ungesättigte $C_3$- bis $C_6$-, bevorzugt $C_3$- oder $C_4$-Mono- oder

$C_4$- bis $C_6$-Dicarbonsäuren wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure in Betracht. Die Monomeren B umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das säuregruppenhaltige Monomer B ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei Acrylsäure, Methacrylsäure und/oder Itaconsäure besonders bevorzugt sind. Selbstverständlich umfassen die Monomeren B auch die voll- oder teilneutralisierten wasserlöslichen Salze, insbesondere die Alkalimetall- oder Ammoniumsalze, der vorgenannten Säuren.

Das erfindungsgemäß eingesetzte Polymerisat P enthält $\geq 0$ und $\leq 0,5$ Gew.-%, bevorzugt $\geq 0$ und $\leq 0,2$ Gew.-% und insbesondere bevorzugt keinerlei Monomeren B in einpolymerisierter Form.

Als Monomer C findet ausschließlich Methylmethacrylat Verwendung.

Das erfindungsgemäß eingesetzte Polymerisat P enthält $\geq 0$ und $\leq 10$ Gew.-%, bevorzugt $\geq 0$ und $\leq 2,0$ Gew.-% und insbesondere bevorzugt $\geq 0$ und $\leq 0,5$ Gew.-% an Monomerem C in einpolymerisierter Form.

Als Monomere D kommen alle ethylenisch ungesättigten Verbindungen in Betracht, welche sich von den Monomeren A bis C unterscheiden, mit diesen aber copolymerisierbar sind. Geeignete Monomere D sind beispielsweise solche ethylenisch ungesättigten Monomere, deren Homopolymerisate eine Glasübergangstemperatur $Tg \leq 30$ °C aufweisen, wie beispielsweise konjugierte aliphatische $C_4$- bis $C_9$-Dienverbindungen, Ester aus Vinylalkohol und einer $C_1$- bis $C_{10}$-Monocarbonsäure, $C_1$- bis $C_{10}$-Alkylacrylat, $C_5$- bis $C_{10}$-Alkylmethacrylat, $C_5$- bis $C_{10}$-Cycloalkylacrylat und -methacrylat, $C_1$- bis $C_{10}$-Dialkylmaleinat und/oder $C_1$- bis $C_{10}$-Dialkylfumarat, Vinylether von $C_3$- bis $C_{10}$-Alkanolen, verzweigte und unverzweigte $C_3$- bis $C_{10}$-Olefine. Vorteilhaft werden solche Monomere D verwendet, deren Homopolymerisate eine Glasübergangstemperatur $Tg < 0$°C aufweisen. Insbesondere vorteilhaft werden als Monomere D Vinylacetat, Ethylacrylat, n-Propylacrylat, n-Butylacrylat, iso-Butylacrylat, sec-Butylacrylat, n-Hexylacrylat, 2-Ethylhexylacrylat, n-Hexylmethacrylat, 2-Ethylhexylmethacrylat, Di-n-butylmaleinat, Di-n-butyl-fumarat verwendet, wobei 2-Ethylhexylacrylat, n-Butylacrylat, 1,4-Butadien und/oder Ethylacrylat insbesondere bevorzugt sind.

Unter $C_1$- bis $C_{10}$-Alkylgruppen sollen im Rahmen dieser Schrift lineare oder verzweigte Alkylreste mit 1 bis 10-Kohlenstoffatomen, beispielsweise Methyl, Ethyl, n-Propyl, iso-Propyl, n-Butyl, sec-Butyl, iso-Butyl, tert.-Butyl, n-Pentyl, iso-Pentyl, tert.-Pentyl n-Hexyl, 2-Ethylhexyl, n-Nonyl oder n-Decyl verstanden werden. Unter $C_5$- bis $C_{10}$-Cycloalkylgruppen sind vorzugsweise Cyclopentyl- oder Cyclohexylgruppen zu verstehen, welche gegebenenfalls durch 1, 2 oder 3 $C_1$-bis $C_4$-Alkylgruppen substituiert sein können.

Zu den Monomeren D zählen aber auch solche ethylenisch ungesättigten Monomere, deren Homopolymerisate eine Glasübergangstemperatur $Tg \geq 50$ °C aufweisen und welche sich von den Monomeren A bis C unterscheiden. Geeignete Monomere D sind beispielsweise vinylaromatische Monomere, $C_2$- bis $C_4$-Alkylmethacrylate und ethylenisch ungesättigte Nitrilverbindungen. Unter vinylaromatischen Monomeren versteht man insbesondere Derivate des Styrols oder des $\alpha$-Methylstyrols, in denen die Phenylkerne gegebenenfalls durch 1, 2 oder 3 $C_1$- bis $C_4$-Alkylgruppen, Halogen, insbesondere Brom oder Chlor und/oder Methoxygruppen substituiert sind. Bei den ethylenisch ungesättigten Nitrilverbindungen handelt es sich im wesentlichen um die Nitrile, die sich von den vorgenannten $\alpha,\beta$-monoethylenisch ungesättigten, insbesondere $C_3$-bis $C_6$-, bevorzugt $C_3$- oder $C_4$-Mono- oder Dicarbonsäuren ableiten, wie beispielsweise Acrylnitril, Methacrylnitril, Maleinsäuredinitril und/oder Fumarsäuredinitril, wobei Acrylnitril und/oder Methacrylnitril besonders bevorzugt sind. Besonders bevorzugte derartige Monomere sind Styrol, $\alpha$-Methylstyrol, o- oder p-Vinyltoluol, p-Acetoxystyrol, p-Bromstyrol, p-tert.-Butylstyrol, o-, m-oder p-Chlorstyrol, tert.-Butylacrylat, tert.-Butylmethacrylat, Ethylmethacrylat, Isobutylmethacrylat, n-Hexylacrylat, Cyclohexylmethacrylat, Acrylnitril, Methacrylnitril, aber beispielsweise auch tert.-Butylvinylether oder Cyclohexylvinylether, wobei jedoch Styrol und/oder tert.-Butylmethacrylat insbesondere bevorzugt sind.

Als Monomere D kommen auch solche Verbindungen in Betracht, welche wenigstens zwei nicht konjugierte ethylenisch ungesättigte Gruppen aufweisen. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, Tri-Ester dreiwertiger Alkohole mit $\alpha,\beta$-monoethylenisch ungesättigten Monocarbonsäuren, wie beispielsweise Glyzerintriacrylat, Glyzerintrimethacrylat, Trimethylolpropantriacrylat, Trimethylolpropantrimethacrylat, sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Insbesondere bevorzugt sind 1,4-Butylenglykoldiacrylat, Allylmethacrylat und/oder Divinylbenzol. Der Anteil an diesen vernetzenden Monomeren beträgt vorteilhaft $\leq 5$ Gew.-%, bevorzugt $\leq 2$ Gew.-% und insbesondere vorteilhaft $\leq 1$ Gew.-%, jeweils bezogen auf die Gesamtmenge an Monomeren D.

Mit Vorteil bestehen die Monomeren D zu ≥ 90 Gew.-%, bevorzugt zu ≥ 95 Gew.-% und insbesondere bevorzugt zu ≥ 98 Gew.-% aus n-Butylacrylat, 2-Ethylhexylacrylat, Ethylacrylat und/oder 1,4-Butadien oder Gemischen dieser Monomere mit Styrol.

Wesentlich ist jedoch, dass das Polymerisat P eine Glasübergangstemperatur Tg im Bereich von ≥ -55 und ≤ 30 °C, vorteilhaft im Bereich ≥ -35 und ≤ 15 °C und insbesondere vorteilhaft im Bereich ≥ -20 und ≤ 5 °C aufweisen. Sollen die erfindungsgemäßen zementfreien wässrigen Dispersionen in flexiblen mineralischen Dichtschlämmen eingesetzt werden, so werden die Polymerisate P so gewählt, dass deren Glasübergangstemperatur Tg im Bereich von ≥ -40 und ≤ 10 °C, vorteilhaft im Bereich ≥ -20 und ≤ 5 °C und insbesondere vorteilhaft im Bereich ≥ -15 und ≤ 0°C liegt. Sollen dagegen die erfindungsgemäßen zementfreien wässrigen Dispersionen in Reparaturmörteln eingesetzt werden, so werden die Polymerisate P so gewählt, dass deren Glasübergangstemperatur Tg im Bereich von ≥ -15 und ≤ 20 °C, vorteilhaft im Bereich ≥ -5 und ≤ 20 °C und insbesondere vorteilhaft im Bereich ≥ 0 und ≤ 15 °C liegt. Die erfindungsgemäß eingesetzten Polymerisate P enthalten daher die Monomeren A bis D derart in Art und Menge in einpolymerisierter Form, dass sie die vorgenannten Glasübergangstemperaturen Tg aufweisen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt zur Abschätzung der Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Im Rahmen dieser Schrift beziehen sich die Angaben zu Glasübergangstemperaturen Tg jedoch auf die Glasübergangstemperaturen, welche nach dem DSC-Verfahren (Differential Scanning Calorimetry, 20 K/min, midpoint-Messung, DIN 53765) mittels eines DSC 822-Gerätes (Serie TA 8000) der Firma Mettler-Toledo ermittelt wurden.

Die Herstellung der Polymerisate P ist dem Fachmann prinzipiell geläufig und erfolgt beispielsweise durch radikalische Polymerisation der Monomere A bis D nach der Methode der Substanz-, Emulsions-, Lösungs-, Fällungs- oder Suspensionspolymerisation, wobei jedoch die radikalisch initiierte wässrige Emulsionspolymerisation insbesondere bevorzugt ist. Erfindungsgemäß vorteilhaft wird das Polymerisat P daher in einem wässrigen Medium dispergiert, d.h. in Form einer wässrigen Polymerisatdispersion eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt. Von dieser allgemeinen Verfahrensweise unterscheidet sich die Herstellung einer wässrigen Dispersion des Polymerisats P lediglich durch den spezifischen Einsatz der vorgenannten Monomeren A bis D. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Zur Herstellung der erfindungsgemäß eingesetzten Polymerisate P in Form ihrer wässrigen Polymerisatdispersionen (wässrige Polymerisat P-Dispersionen) kann die Gesamtmenge der Monomeren A bis D (Gesamtmonomerenmenge) im wässrigen Reaktionsmedium vor Initiierung der Polymerisationsreaktion vorgelegt werden. Es ist aber auch möglich, gegebenenfalls lediglich eine Teilmenge der Monomeren A bis D im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Dabei kann die Dosierung der Monomeren A bis D als separate Einzelströme, als inhomogene oder homogene (Teil)gemische oder als Monomerenemulsion erfolgen. Mit Vorteil werden die Monomeren A bis D in Form eines Monomerengemisches, insbesondere in Form einer wässrigen Monomerenemulsion dosiert.

Zur Herstellung der erfindungsgemäß eingesetzten wässrigen Polymerisat P-Dispersionen werden Dispergierhilfsmittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersionen gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

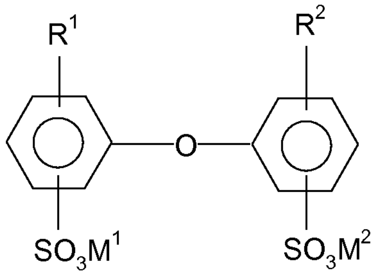

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium

oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,1 und $\leq$ 3 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft $\geq$ 0,1 und $\leq$ 40 Gew.-% und häufig $\geq$ 0,2 und $\leq$ 25 Gew.-%, jeweils bezogen die Gesamtmonomerenmenge.

Bevorzugt werden jedoch anionische und/oder nichtionische Emulgatoren als Dispergierhilfsmittel eingesetzt.

Zur Herstellung der erfindungsgemäß eingesetzten Polymerisat P-Dispersionen kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Zur Herstellung der erfindungsgemäß eingesetzten Polymerisat P-Dispersionen kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 70 bis 100 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis F mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt enthält das wässrige Reaktionsmedium keinerlei solcher Lösungsmittel.

Neben den vorgenannten Komponenten können während der Emulsionspolymerisation optional auch radikalkettenübertragende Verbindungen eingesetzt werden, um das Molekulargewicht der durch die Polymerisation zugänglichen Polymerisate P zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die während der Emulsionspolymerisation optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis D während der Polymerisation zugeführt werden.

Mit besonderem Vorteil erfolgt die Herstellung der wässrigen Polymerisat P-Dispersionen dergestalt, dass die Monomeren A bis D unter Polymerisationsbedingungen bis zu einem Umsatz von ≥ 95 Gew.-%, vorteilhaft ≥ 99 Gew.-

% und insbesondere vorteilhaft ≥ 99,5 Gew.-% umgesetzt werden. Die Ermittlung des Monomerenumsatzes ist dem Fachmann geläufig und erfolgt insbesondere durch reaktionskalorimetrische und/oder spektroskopische Methoden. Häufig ist es vorteilhaft, wenn die nach Abschluss der Polymerisation erhaltenen wässrigen Polymerisat P-Dispersionen einer Nachbehandlung zur Reduzierung des Restmonomerengehalts unterzogen werden. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisat P-Dispersionen mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten Monomeren, auch noch andere störende leichtflüchtige organischen Bestandteile (die sogenannten VOCs [volatile organic compounds]) aus den wässrigen Polymerisat P-Dispersionen entfernt werden.

Die erfindungsgemäß eingesetzten wässrigen Polymerisat P-Dispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel im Bereich ≥ 10 und ≤ 1000 nm, bevorzugt im Bereich ≥ 50 und ≤ 600 nm und vorteilhaft im Bereich ≥ 100 bis ≤ 500 nm.

Vorteilhaft weisen die wässrigen Polymerisat P-Dispersionen einen pH-Wert im Bereich von ≥ 6 bis ≥ 8 und insbesondere vorteilhaft von ≥ 6,5 bis ≤ 7,5, jeweils gemessen mit einem geeichten handelsüblichen pH-Meter bei 23 °C, auf.

Calcium-Silikat-Hydrate sind dem Fachmann prinzipiell bekannt. Es handelt sich dabei um Reaktionsprodukte der bei der Zementklinkerherstellung entstehenden und daher im Zement im wesentlichen vorliegenden Klinkerphasen $CasSiO_5$ ($C_3S$) und $Ca_2SiO_4$ ($C_2S$) mit Wasser. Die dabei gebildeten Calcium-Silikat-Hydrate sind maßgeblich für die Festigkeit des entstandenen Zementsteins verantwortlich und binden zudem die in Beton oder Mörtel enthaltenen Zuschläge, wie beispielsweise Sand oder Kies bzw. Zusätze, wie beispielsweise natürliche oder künstliche Fasern.

Die Herstellung von zementfreien feinteiligen Calcium-Silikat-Hydraten in Form ihrer wässrigen Suspensionen mit einem gewichtsmittleren Teilchendurchmesser ≥ 0,1 und ≤100 nm ist dem Fachmann prinzipiell aus den Schriften WO 2010/26155, WO 2011/26720, WO 2011/26723 sowie der nicht vorveröffentlichten Euro-PCT-Anmeldung, basierend auf der europäischen Prioritätsanmeldung mit der Anmeldenummer 11163464.8 bekannt.

Die nach der Lehre der vorgenannten Schriften erhaltenen zementfreien feinteiligen Calcium-Silikat-Hydraten können prinzipiell zur Herstellung der erfindungsgemäßen wässrigen Dispersionen eingesetzt werden. Daher sollen die in der WO 2010/26155, Seite 2, Zeile 4 bis Seite 67, Zeile 39, in der WO 2011/26720, Seite 2 Zeile 16 bis Seite 66, Zeile 10, in der WO 2011/26723, Seite 2, Zeile 5 bis Seite 33, Zeile 7 offenbarten Gegenstände durch ihre ausdrückliche Bezugnahme als zum Bestandteil dieser Schrift zugehörig betrachtet werden.

Vorteilhaft weisen die erfindungsgemäß eingesetzten Calcium-Silikat-Hydrate folgende mittlere Zusammensetzung auf:

$$(CaO)_a(X_2O)_b(YO)_cSiO_2(Al_2O_3)_d(H_2O)_e,$$

wobei

X für Natrium und/oder Kalium,
Y für Magnesium, Strontium und/oder Barium und

- a: für einen Wert ≥ 0,1 und ≤ 2,
- b: für einen Wert ≥ 0 und ≤ 0,5,
- c: für einen Wert ≥ 0 und ≤ 2,
- d: für einen Wert ≥ 0 und ≤ 1, und
- e: für einen Wert ≥ 1 und ≤ 6

stehen.

Mit besonderem Vorteil steht

- a: für einen Wert ≥ 0,6 und ≤ 1,8,
- b: für einen Wert ≥ 0 und ≤ 0,2,
- c: für einen Wert ≥ 0 und ≤ 0,1,
- d: für einen Wert ≥ 0 und ≤ 0,1, und
- e: für einen Wert ≥ 1 und ≤ 6.

Erfindungswesentlich ist, dass die Calcium-Silikat-Hydrate einen gewichtsmittleren Teilchendurchmesser ≥ 0,1 und ≤ 100 nm, vorteilhaft ≥ 1 und ≤ 50 nm und insbesondere vorteilhaft ≥ 5 und ≤ 20 nm aufweisen. Die Bestimmung der gewichtsmittleren Teilchendurchmesser ist dem Fachmann bekannt und erfolgt durch Methode der Analytischen Ultrazentrifuge. Unter gewichtsmittlerem Teilchendurchmesser wird in dieser Schrift der nach der Methode der Analytischen Ultrazentrifuge bei 25 °C ermittelte gewichtsmittlere Dw50-Wert verstanden (vgl. hierzu H. Cölfen, "Analytical Ultracentrifugation of Nanoparticles" in Encyclopedia of Nanoscience and Nanotechnology [American Scientific Publishers, 2004] Seiten 67 bis 88).

Vorzugsweise wird als Calcium-Silikat-Hydrat Foshagit, Hillebrandit, Xonotlit, Nekoit, Clinotobermorit, 9 Ä-Tobermorit (Riversiderit), 11 Ä-Tobermorit, 14 Ä-Tobermorit (Plombierit), Jennit, Metajennit, Calcium Chondrodit, Afwillit, $\alpha$-$C_2S \cdot H_2O$, Dellait, Jaffeit, Rosenhahnit, Killalait und/oder Suolunit eingesetzt, wobei Xonotlit, 9 Ä-Tobermorit (Riversiderit), 11 Ä-Tobermorit, 14 Ä-Tobermorit (Plombierit), Jennit, Metajennit, Afwillit und/oder Jaffeit besonders bevorzugt sind.

Besonders bevorzugt sind erfindungsgemäß solche Calcium-Silikat-Hydrate geeignet, welche durch Umsetzung von Natriummetasilikat [$Na_2O \cdot n\ SiO_2$ mit n = 1 bis 4, vorzugsweise 1 bis 3,4] mit Calciumnitrat, Calciumacetat, Calciumhydroxid, Calciumsulfat und/oder Calciumformiat in wässrigem Medium hergestellt wurden.

Dabei werden die Einsatzstoffe in Art und Menge mit Vorteil so gewählt, dass ein molares Ca/Si-Verhältnis im Calcium-Silikat-Hydrat von 1:1 bis 1:1,6 resultiert. Mit besonderem Vorteil beträgt das molare Ca/Si-Verhältnis im Calcium-Silikat-Hydrat von 1:1 bis 1:1,3.

Besonders vorteilhaft werden solche Calcium-Silikat-Hydrate durch Umsetzung von Natriummetasilikat mit Calciumnitrat, Calciumacetat, Calciumhydroxid, Calciumsulfat und/oder Calciumformiat in Anwesenheit eines im wässrigen Medium gelösten organischen Kammpolymeren hergestellt. Geeignete organische Kammpolymere sind in der WO 2010/26155, Seite 9, Zeile 34 bis Seite 16, Zeile 49, in der WO 2011/26720, Seite 16 Zeile 5 bis Seite 24, Zeile 4 und in der WO 2011/26723, Seite 19, Zeile 1 bis Seite 26, Zeile 12 offenbart.

Vorteilhaft liegen die erfindungsgemäß einsetzbaren feinteiligen Calcium-Silikat-Hydrate in Form ihrer wässrigen Dispersionen vor. Dabei beträgt der Feststoffgehalt an Calcium-Silikat-Hydraten in der Regel ≥ 0,1 und ≤ 20 Gew.-%, vorteilhaft ≥ 1 und ≤ 10 Gew.-% und insbesondere vorteilhaft ≥ 2 und ≤ 8 Gew.-%, jeweils bezogen auf die wässrige Dispersion der Calcium-Silikat-Hydrate. Der Feststoffgehalt an Calcium-Silikat-Hydraten wird durch Eindampfen einer Probe bei 60 °C und anschließender thermogravimetrischer Analyse rechnerisch ermittelt.

Die erfindungsgemäßen wässrigen Dispersionen, enthaltend Teilchen von Polymerisat P und Teilchen von Calcium-Silikat-Hydrat, werden vorteilhaft erhalten, in dem die wässrige Dispersion des Calcium-Silikat-Hydrats und die wässrige Dispersion des Polymerisats P in beliebiger Reihenfolge miteinander gemischt werden, wobei jedoch bevorzugt die wässrige Dispersion des Calcium-Silikat-Hydrats bei einer Temperatur ≥ 5 und ≤ 40 °C zur wässrigen Dispersion des Polymerisats P zugegeben und die erhaltene wässrige Dispersion homogen gemischt wird.

Bei der Abmischung werden in der Regel wässrige Dispersionen hergestellt, deren Gewichtsverhältnis von Polymerisat P zum Calcium-Silikat-Hydrat (jeweils als Feststoff gerechnet) 1:1 bis 90:1, vorteilhaft 5:1 bis 75:1 und insbesondere vorteilhaft 20:1 bis 60:1 beträgt.

Selbstverständlich lassen sich aus den erfindungsgemäßen wässrigen Dispersionen, enthaltend Teilchen von Polymerisat P und Teilchen von Calcium-Silikat-Hydrat, nach üblichen Trocknungsverfahren (wie beispielsweise Gefriertrocknung oder Sprühtrocknung) die entsprechenden Polymerisatpulverzusammensetzungen herstellen.

Mit besonderem Vorteil lassen sich die Polymerisatpulverzusammensetzungen durch dem Fachmann geläufige Sprühtrocknungsverfahren aus den wässrigen Dispersionen, enthaltend Teilchen von Polymerisat P und Teilchen von Calcium-Silikat-Hydrat, herstellen. Hierzu werden in der Regel die wässrigen Dispersionen mit 0,1 bis 30, häufig 5 bis 15 Gew.-%, bezogen auf die Summe der Gesamtmengen an Polymerisat P und Calcium-Silikat-Hydrat, an sogenannten Trocknungshilfsmittel versetzt. Entsprechende Trocknungshilfsmittel sind dem Fachmann geläufig und beispielsweise in der EP-A 812872, Seite 5, Zeile 20 bis Seite 6, Zeile 17, sowie dem dort angegebenen Stand der Technik offenbart.

Dabei erfolgt die Sprühtrocknung der erfindungsgemäßen wässrigen Dispersion in der Regel dergestalt, dass die wässrige Dispersion bei einer Eingangstemperatur $T_E$ des Warmluftstroms bei 100 bis 200 °C, vorzugsweise bei 120 bis 160 °C und einer Ausgangstemperatur $T_A$ des Warmluftstroms von 30 bis 90 °C, vorzugsweise 50 bis 90 °C in einem Trockenturm versprüht wird. Das Versprühen der wässrigen Dispersion im Warmluftstrom kann dabei beispielsweise mittels Ein- oder Mehrstoffdüsen oder über eine rotierende Scheibe erfolgen. Die Abscheidung der Polymerisatpulverzusammensetzung erfolgt normalerweise unter Verwendung von Zyklonen oder Filterabscheidern. Die versprühte wässrige Dispersion und der Warmluftstrom werden vorzugsweise parallel geführt. Vorteilhaft wird während des Sprühtrockenvorgangs im Trockenturm noch ein dem Fachmann geläufiges feinteiliges mineralisches Antiblockmittel, wie beispielsweise feinteiliges Kieselgel, zudosiert, das insbesondere ein Verklumpen der bei der Sprühtrocknung anfallenden Partikel der Polymerisatpulverzusammensetzung während einer längeren Lagerung unterbindet.

Demgemäß sind erfindungsgemäß auch die bei einer Trocknung gebildeten Polymerisatpulverzusammensetzungen umfasst, welche Teilchen von Polymerisat P und Teilchen von Calcium-Silikat-Hydrat enthalten.

Die erfindungsgemäßen wässrigen Dispersionen und die Polymerisatpulverzusammensetzungen, eignen sich

vorteilhaft als Additiv in wässrigen Formulierungen hydraulisch abbindender Massen, wie Mörtel und Betone, insbesondere dann, wenn Zement die alleinige hydraulisch abbindende Masse darstellt. Je nach Vorhaben können also beispielsweise Hochofenzement, Ölschieferzement, Portlandzement, hydrophobierter Portlandzement, Schnellzement, Quellzement oder Tonerdezement vorteilhaft als hydraulisch abbindende Masse eingesetzt werden.

Demnach sind erfindungsgemäß auch wässrige Formulierungen hydraulisch abbindender Massen, wie insbesondere Mörtel und Betone umfasst, welche eine wässrige Dispersion, enthaltend Teilchen von Polymerisat P und Teilchen von Calcium-Silikat-Hydrat oder eine daraus durch Trocknung erhältliche Polymerpulverzusammensetzung enthalten. Selbstverständlich sollen erfindungsgemäß auch wässrige Formulierungen hydraulisch abbindender Massen umfasst sein, in welche wenigstens eine wässrigen Polymerisat P-Dispersion und wenigstens eine wässrige Dispersion eines Calcium-Silikat-Hydrats als separate Komponenten zugegeben wurden.

Bezogen auf die hydraulisch abbindende Massen, insbesondere Zement (als Feststoff und ohne Zuschläge berechnet), beträgt die Summe der Gesamtmengen an Polymerisat P und Calcium-Silikat-Hydrat (in wässriger Dispersion bzw. Polymerpulverzusammensetzung als Feststoff gerechnet) insgesamt 10 bis 150 Gew.-% und vorteilhaft 80 bis 100 Gew.-%.

Durch die erfindungsgemäßen zementfreien wässrigen Dispersionen, enthaltend in dispergierter Form Teilchen eines Polymerisats P und Teilchen eines Calcium-Silikat-Hydrates, sowie der daraus durch Trocknung erhältlichen Polymerpulverzusammensetzungen sind Additivsysteme zugänglich, welche in wässrige Formulierungen hydraulisch abbindender Massen, wie insbesondere Mörteln und Betonen vorteilhafte Eigenschaften, wie insbesondere schnelleres Abbinden und bessere mechanischen Eigenschaften der abgebundenen/ausgehärteten Mörtel und Betone bei gleichbleibenden Verarbeitungseigenschaften der Mörtel und Betone aufweisen.

Die nachfolgenden, nicht einschränkenden Beispiele sollen die Erfindung erläutern.

Beispiele

A) Herstellung der wässrigen Dispersion des Calcium-Silikat-Hydrates

In einem ersten Schritt wurden drei wässrige Lösungen bei 20 bis 25 °C (Raumtemperatur) hergestellt, indem die entsprechenden Salze bzw. Polymere in entionisiertem Wasser gelöst wurden:

Lösung 1: 10,7 g Natriummetasilikat ($Na_2SiO_3 \cdot 5\ H_2O$) und 30,0 g entionisiertesWasser
Lösung 2: 12,0 g Calciumnitrat-Tetrahydrat und 11,1 g entionisiertes Wasser
Lösung 3: 13,0 g Glenium® ACE 30 (Betonfließmittel der Fa. BASF SE) und 920,3 g entionisiertes Wasser

Daran anschließend wurde Lösung 3 in einem 2 l-Glaskolben vorgelegt und bei Raumtemperatur mit 300 Upm gerührt. Zu dieser Vorlage wurden die Lösungen 1 und 2 gleichzeitig beginnend kontinuierlich zudosiert, wobei Lösung 1 mit einer Dosiergeschwindigkeit von 69,6 ml pro Stunde und Lösung 2 mit einer Dosiergeschwindigkeit von 31,2 ml pro Stunde zudosiert wurden. Anschließend wurde die erhaltene Dispersion für weitere 30 Minuten bei Raumtemperatur gerührt. Der Feststoffgehalt der erhaltenen Dispersion betrug 2,4 Gew. % und der gewichtsmittlere Teilchendurchmesser betrug 15 nm.

Der Feststoffgehalt wurde bestimmt, indem eine Probe (ca. 0,5 g) in einem Aluminiumtiegel mit einem Innendurchmesser von ca. 3 cm bei 60 °C bis zur Gewichtskonstanz getrocknet wurden (ca. 3 Stunden).

Der gewichtsmittlere Teilchendurchmesser wurde nach der Methode der Analytischen Ultrazentrifuge bestimmt.

B) Herstellung der wässrigen Polymerisatdispersionen

Polymerisatdispersion D

In einem 4 l-Glasgefäß mit Ankerrührer, Heiz- und Kühlvorrichtungen sowie verschiedenen Zuläufen wurden bei Raumtemperatur

| | |
|---|---|
| 400,0 g | entionisiertes Wasser und |
| 6,8 g | eines Polystyrolsaatlatex (Feststoffgehalt 33 Gew.-%; mit einem gewichtsmittleren Teilchendurchmesser von 28 nm) |

vorgelegt und anschließend unter Rühren (140 UpM) auf eine Innentemperatur von 90 °C aufgeheizt. Nach Erreichen dieser Temperatur wurden 10 Gew.-% der Starterlösung in einer Portion zugegeben und die erhaltene Mischung für 5 Minuten gerührt. Daran anschließend wurden gleichzeitig beginnend die Gesamtmenge der Monomerenemulsion innerhalb von 180 Minuten und die verbleibende Menge der Starterlösung innerhalb von 195 Minuten kontinuierlich und mit gleichbleibenden Mengenströmen über räumlich getrennte Zuläufe zudosiert.

Starterlösung:

| | |
|---|---|
| 8,4 g | Natriumperoxodisulfat |
| 111,6 g | entionisiertes Wasser |

Monomerenemulsion:

| | |
|---|---|
| 544,0 | entionisiertes Wasser |
| 61,5 g | einer 32 gew.-%igen wässrigen Lösung eines Fettalkoholpolyglycolethersulfats (Emulphor® FAS 30 der Firma BASF SE) |
| 140,0 g | einer 20 gew.-%igen wässrigen Lösung eines Fettalkoholpolyethoxylats (Lutensol® AT 18 der Firma BASF SE) |
| 5,0 g | einer 15 gew.-%igen wässrigen Lösung von Natriumlaurylsulfat |
| 90,0 g | Hydroxyethylmethacrylat |
| 480,0 g | Styrol |
| 15,0 g | Methylmethacrylat, |
| 30,0 g | n-Butylacrylat und |
| 815,0 g | 2-Ethylhexylacrylat |

Daran anschließend ließ man das Reaktionsgemisch noch 15 Minuten bei vorgenannter Temperatur nachreagieren und kühlte dann das Gemisch auf 85 °C ab. Anschließend führte man dem Reaktionsgemisch bei dieser Temperatur gleichzeitig beginnend 30 g einer 10 gew.-% wässrigen Lösung von tert.-Butylhydroperoxid und 34 g einer 13 gew.-%igen wässrigen Lösung von Acetonbisulfit (1:1 Additionsprodukt aus Aceton und Natriumhydrogensulfit) über einen Zeitraum von 120 Minuten und über räumlich getrennte Zuläufe mit kontinuierlich gleichbleibenden Mengenströmen zu. Daran anschließend ließ man das Reaktionsgemisch noch 15 Minuten bei vorgenannter Temperatur nachreagieren und kühlte dann das Gemisch auf Raumtemperatur ab. Danach wurde die erhaltene wässrige Polymerisatdispersion mit einer 20 gew.-%igen wässrigen Natriumhydroxidlösung auf einen pH Wert von 7,5 eingestellt. Die erhaltenen Polymerisatdispersion hatte einen Feststoffanteil von 56,8 Gew.-%, einen zahlenmittleren Teilchendurchmesser von 230 nm und eine Glasübergangstemperatur von -13°C.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13321).

Zur Bestimmung der Glasübergangstemperatur wurden generell die wässrigen Polymerisatdispersionen mit einer Schichtdicke von ca. 1 mm auf eine Teflonfolie aufgetragen und die erhaltenen Filme für 24 Stunden bei 23 °C und 50 % rel. Luftfeuchtigkeit (Normklima) getrocknet. Die Glasübergangstemperatur wurde generell mittels eines Differential Scanning Calorimeters Q 2000 der Firma TA Instruments bestimmt. Typischerweise wurde von den erhaltenen Polymerisatfilmen eine Einwaage von ca. 8,5 mg verwendet. Die Aufheizrate betrug 20 K pro Minute. Es wurde jeweils die zweite Aufheizkurve detektiert und nach den Vorgaben der ISO-Norm 11357-2 und -3 ausgewertet.

Vergleichsdispersion V1

Die Herstellung der Vergleichsdispersion V1 erfolgte völlig analog der Herstellung der Polymerisatdispersion D mit dem Unterschied, dass 30,0 g Acrylsäure anstelle von 15,0 g Methylmethacrylat und 800,0 g anstelle von 815,0 g 2-Ethylhexylacrylat eingesetzt wurden.

Die so hergestellte Vergleichsdispersion V1 hatte einen Feststoffanteil von 56,4 Gew.-%, einen zahlenmittleren Teilchendurchmesser von 260 nm und eine Glasübergangstemperatur von-12°C.

Vergleichsdispersion V2

Die Herstellung der Vergleichsdispersion V2 erfolgte völlig analog der Herstellung der Polymerisatdispersion D mit dem Unterschied, dass 480,0 g Metylmethacrylat anstelle von 480,0 g Styrol und 15,0 g Methylmethacrylat und 830,0 g anstelle von 815,0 g 2-Ethylhexylacrylat eingesetzt wurden.
Die so hergestellte Vergleichsdispersion V2 hatte einen Feststoffanteil von 56,9 Gew.-%, einen zahlenmittleren Teilchendurchmesser von 250 nm und eine Glasübergangstemperatur von-15°C.

C) Anwendungstechnische Untersuchungen

I) Bestimmung der Lagerstabilität

Durch Verdünnen mit entionisiertem Wasser wurden die Polymeriatdispersion D sowie die Vergleichsdispersionen V1 und V2 auf einen Feststoffgehalt von 56,0 Gew.-% eingestellt.
500,0 g der so erhaltenen wässrigen Polymerisatdispersionen wurden bei Raumtemperatur unter Rühren mit 80,0 g der unter A) erhaltenen wässrigen Calcium-Silikat-Hydrat-Dispersion versetzt und weitere 2 Minuten gerührt. Die so erhaltenen wässrigen Dispersionen werden im Folgenden als wässrige Dispersionen CD, CV1 und CV2 bezeichnet. Daran anschließend wurden die wässrigen Dispersionen im geschlossenen Gefäß bei 23 °C gelagert. Unmittelbar nach der Herstellung sowie nach 4 Tagen und nach 28 Tagen Lagerung wurden die Viskositäten der erhaltenen wässrigen Dispersionen CD, CV1 und CV2 bei 23 °C mittels eines Brookfield Viskosimeters mit Spindel SP1 bei 20 Umdrehungen pro Minute (UpM) bestimmt. Die erhaltenen Viskositätswerte in mPa•s sind in nachfolgender Tabelle 1 angegeben.

Tabelle 1: Viskositäten in Abhängigkeit von der Lagerzeit

| | Viskosität [in mPa•s] | | |
|---|---|---|---|
| wässrige Dispersion | nach Herstellung | nach 4 Tagen | nach 28 Tagen |
| CD | 100 | 110 | 150 |
| CV1 | 150 | 570 | 1120 |
| CV2 | 200 | 256 | 712 |

II) Herstellung von Mörtelmischungen

Zur Bestimmung der anwendungstechnischen Eigenschaften wurden mit den wässrigen Dispersionen D, V1, V2, CD, CV1 und CV2 Mörtelmischungen hergestellt. Vor ihrem Einsatz wurden alle wässrigen Dispersionen D, V1, V2, CD, CV1 und CV2 für 7 Tage in geschlossenen Gefäßen bei 23 °C gelagert.
Zur Herstellung der Mörtelmischungen wurde in einem ersten Schritt eine homogene Trockenmischung bestehend aus

| | |
|---|---|
| 25 Gew.-% | Portlandzement Milke CEM I 42,5, |
| 25 Gew.-% | Quarzsand (Korngröße < 0,09 mm), |
| 25 Gew.-% | Quarzsand (Korngröße 0,08 - 0,2 mm) und |
| 25 Gew.-% | Quarzsand (Korngröße 0,2 - 0,5 mm) |

durch Mischen in einem Taumelmischer hergestellt.
Daran anschließend erfolgte die Herstellung der Mörtelmischungen dergestalt, dass jeweils 50 Gew.-Teile der wässrigen Dispersionen D, V1, V2, CD, CV1 und CV2 in einem Gefäß bei Raumtemperatur unter Rühren (500 UpM) vorgelegt, je 80 Gew.-Teilen der vorgenannten Trockenmischung zugegeben und die erhaltenen Mörtelmischungen für eine Minute bei 600 UpM weitergerührt wurden. Die dabei erhaltenen Mörtelmischungen werden im Folgenden Mörtelmischungen AD, AV1, AV2, ACD, ACV1 und ACV2 genannt. Von Bedeutung ist jedoch, dass die Mörtelmischungen ACV1 und ACV2 danach derart rasch und stark verdickten, dass keine anwendungstechnische Prüfungen durchgeführt werden konnten.

a) Prüfung der "offenen Zeit"

Unter "offener Zeit" versteht der Fachmann die Zeit, während der eine Mörtelmischung noch plastisch verformbar und daher verarbeitbar bleibt. Zur Bestimmung der offenen Zeit wurden die frisch hergestellten Betonmischungen AD,

AV1, AV2 und ACD bei einer Temperatur von 23 °C alle 5 Minuten manuell per Hand mit einem Spatel gerührt und Änderungen der Viskositäten beobachtet. Ein sprunghafter Viskositätsanstieg markiert das Ende der offenen Zeit. Die erhaltenen Ergebnisse sind in Tabelle 2 zusammengefasst. Günstig ist eine offene Zeit von ≥ 30 Minuten.

b) Prüfung der Durchhärtungszeit

Zur Prüfung der Durchhärtungszeiten wurden Aluminiumbleche mit einer selbstklebenden Teflonfolie beschichtet. Auf diese Folien wurden anschließend die frisch hergestellten Mörtelmischungen AD, AV1, AV2 und ACD mit Hilfe eines Spachtels mit einer Höhe von ca. 2,5 mm aufgetragen. Der Auftrag und die Lagerung der aufgetragenen Mörtelmischungen erfolgte unter Normklimabedingungen.

Als Durchhärtungszeit wurde jene Zeit festgelegt, nach der die Mörtelmischungen "begehbar" waren, ohne sichtbare Abdrücke zu hinterlassen. Hierzu wurde alle 15 Minuten ein 5 kg-Gewicht mit einer ebenen kreisrunden Aufstellfläche mit einem Durchmesser von 12 cm auf die Mörtelschicht aufgelegt und jeweils die Zeit bestimmt, nach der kein Eindruck des Gewichtes in der Mörtelschicht mehr zu erkennen war. Je kürzer die Durchhärtungszeit ist, umso schneller kann der Baufortschritt erfolgen.

Die erhaltenen Ergebnisse sind ebenfalls in Tabelle 2 zusammengefasst. Günstig ist es, wenn die Durchhärtungszeit < 150 Minuten beträgt.

c) Prüfung der Haftzugfestigkeit nach 28 Tagen

Die Prüfung der Haftzugfestigkeiten nach 28 Tage Lagerung unter Normklimabedingungen erfolgte in Anlehnung an die DIN EN 14891, Fassung aus November 2007.

Im Vorfeld der Prüfung der Haftzugfestigkeiten wurden die benötigten Betonplatten für mindestens 24 Stunden unter Normklimabedingungen gelagert.

Daran anschließend wurden frisch hergestellte Mörtelmischungen AD, AV1, AV2 und ACD innerhalb der jeweiligen offenen Zeit mit einer Nassschichtdicke von ca. 2,5 mm auf die gelagerten Betonplatten aufgetragen. Die so beschichteten Betonplatten wurden dann jeweils für 4 Stunden unter Normalklimabedingungen gelagert. Daran anschließend wurden auf die so beschichteten Betonplatten die jeweiligen, erneut frisch hergestellten Mörtelmischungen AD, AV1, AV2 und ACD innerhalb der jeweiligen offenen Zeit ein zweites Mal mit einer Nassschichtdicke von ca. 2,5 mm aufgetragen und die erhaltenen beschichteten Betonplatten danach für 24 Stunden bei Normalklimabedingungen gelagert.

Nach der Lagerung wurde ein zementärer Fliesenkleber (z.B. Nanolight der Fa. PCI) mit einer Zahnspachtel auf die hydraulisch abgebundenen Mörtelmischungen aufgetragen. Nach 5 Minuten Ablüftzeit wurden jeweils 4 Fliesen in einem Abstand von 20 mm voneinander angeordnet und jede Fliese wurde 30 Sekunden mit einem Gewicht von 2 kg belastet. Nach weiteren 24 Stunden Lagerung unter Normalklimabedingungen wurden sogenannte Zuganker mit einem Epoxyklebstoff auf den Fliesen verklebt und die erhaltenen mit den Fliesen beklebten Betonplatten für 28 Tage bei Normalklimabedingungen gelagert. Nach dieser Lagerung wurden die Haftzugfestigkeiten der Mörtelmischungen AD, AV1, AV2 und ACD mit einem Gerät der Fa. Herion bestimmt. Hierzu wurde an den Zugankern eine, mit einer konstanten Geschwindigkeit von 250 N pro Sekunde zunehmende Kraft bis zum Abreisen der Fliesen angelegt. Als Haftzugfestigkeit wird dabei die zum Abreisen der Fliesen benötigte Kraft verstanden. Dabei ist die Haftzugfestigkeit umso besser zu bewerten, je höher die Kraft in $N/mm^2$ beim Abreißen der Fliese war. Die ebenfalls in Tabelle 2 angegebenen Werte stellen jeweils die Mittelwerte der mit den 4 Prüffliesen erhaltenen Haftzugfestigkeiten dar.

Tabelle 2: Ergebnisse der offenen Zeit, der Durchhärtungszeit sowie der Haftzugfestigkeit

| Mörtelmischung | offene Zeit [in min] | Durchhärtungszeit [in min] | Haftzugfestigkeit nach nach 28 Tagen [in $N/mm^2$] |
|---|---|---|---|
| AD | 35 | 165 | 1,15 |
| AV1 | 40 | 180 | 1,03 |
| AV2 | 30 | 180 | 0,95 |
| ACD | 35 | 90 | 2,02 |
| ACV1 | - | - | - |
| ACV2 | - | - | - |

Aus den Ergebnissen ist klar ersichtlich, dass die erfindungsgemäße Mörtelmischung ACD im Vergleich zur nicht erfindungsgemäßen Mörtelmischung AD, bei gleicher offener Zeit, eine deutlich kürzere Durchhärtungszeit sowie eine deutlich erhöhte Haftzugfestigkeit nach 28 Tagen aufwies.

## Patentansprüche

1. Zementfreie wässrige Dispersion, enthaltend in dispergierter Form Teilchen eines Polymerisats P und Teilchen eines Calcium-Silikat-Hydrates, wobei
das Polymerisat P einen zahlenmittleren Teilchendurchmesser ≥ 10 und ≤ 1000 nm und eine Glasübergangstemperatur im Bereich ≥ -55 und ≤ 30 °C aufweist und in einpolymerisierter Form aufgebaut ist aus

| | |
|---|---|
| ≥ 0,1 und ≤ 10 Gew.-% | wenigstens eines Hydroxyalkylacrylats, eines Hydroxyalkylmethacrylats und/oder eines Amids einer $\alpha,\beta$-monoethylenisch ungesättigten $C_3$- bis $C_6$-Mono- oder $C_4$- bis $C_6$-Dicarbonsäure (Monomere A), |
| ≥ 0 und ≤ 0,5 Gew.-% | wenigstens einer $\alpha,\beta$-monoethylenisch ungesättigten $C_3$- bis $C_6$-Mono- oder $C_4$- bis $C_6$-Dicarbonsäure (Monomere B), |
| ≥ 0 und ≤ 10 Gew.-% | Methylmethacrylat (Monomer C), und |
| ≥ 90 und ≤ 99,9 Gew.-% | wenigstens eines weiteren ethylenisch ungesättigten Monomeren, welches sich von den Monomeren A bis C unterscheidet (Monomere D), |

wobei sich die Mengen der Monomeren A bis D auf 100 Gew.-% aufsummieren, und wobei
das Calcium-Silikat-Hydrat einen gewichtsmittleren Teilchendurchmesser ≥ 0,1 und ≤ 100 nm aufweist.

2. Wässrige Dispersion nach Anspruch 1, wobei das Calcium-Silikat-Hydrat folgende mittlere Zusammensetzung aufweist

$$(CaO)_a(X_2O)_b(YO)_cSiO_2(Al_2O_3)_d(H_2O)_e,$$

wobei

X für Natrium und/oder Kalium,
Y für Magnesium, Strontium und/oder Barium und
a: für einen Wert ≥ 0,1 und ≤ 2,
b: für einen Wert ≥ 0 und ≤ 0,5,
c: für einen Wert ≥ 0 und ≤ 2,
d: für einen Wert ≥ 0 und ≤ 1, und
e: für einen Wert ≥ 1 und ≤ 6

stehen.

3. Wässrige Dispersion nach einem der Ansprüche 1 oder 2, wobei

a: für einen Wert ≥ 0,6 und ≤ 1,8,
b: für einen Wert ≥ 0 und ≤ 0,2,
c: für einen Wert ≥ 0 und ≤ 0,1,
d: für einen Wert ≥ 0 und ≤ 0,1, und
e: für einen Wert ≥ 1 und ≤ 6

stehen.

4. Wässrige Dispersion nach einem der Ansprüche 1 bis 3, wobei das Calcium-Silikat-Hydrat durch Umsetzung von Natriummetasilikat [$Na_2O \cdot n\ SiO_2$, mit n = 1 bis 4] mit Calciumnitrat, -acetat, -hydroxid, -sulfat und/oder -formiat in wässrigem Medium hergestellt wurde.

5. Wässrige Dispersion nach Anspruch 4, wobei das molare Ca/Si-Verhältnis im Calcium-Silikat-Hydrat 1:1 bis 1:1,6 beträgt.

6. Wässrige Dispersion nach einem der Ansprüche 4 oder 5, wobei die Umsetzung in Anwesenheit eines im wässrigen Medium gelösten organischen Kammpolymeren durchgeführt wurde.

7. Wässrige Dispersion nach einem der Ansprüche 1 bis 6, wobei das Calcium-Silikat-Hydrat einen gewichtsmittleren

Teilchendurchmesser ≥ 5 und ≤ 20 nm aufweist.

**8.** Wässrige Dispersion nach einem der Ansprüche 1 bis 7, wobei das Polymerisat P in einpolymerisierter Form aufgebaut ist aus

| | |
|---|---|
| ≥ 2,0 und ≤ 8,0 Gew.-% | wenigstens eines Monomeren A, |
| ≥ 0 und ≤ 0,2 Gew.-% | wenigstens eines Monomeren B, |
| ≥ 0 und ≤ 2,0 Gew.-% | Monomer C, und |
| ≥ 92 und ≤ 98 Gew.-% | wenigstens eines Monomeren D. |

**9.** Wässrige Dispersion nach einem der Ansprüche 1 bis 8, wobei das Monomere A 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, Acrylamid und/oder Methacrylamid ist.

**10.** Wässrige Dispersion nach einem der Ansprüche 1 bis 9, wobei die Monomeren D zu ≥ 90 Gew.-% aus n-Butylacrylat, 2-Ethylhexylacrylat, Ethylacrylat, und/oder 1,4-Butadien oder Gemischen dieser Monomere mit Styrol bestehen.

**11.** Wässrige Dispersion nach einem der Ansprüche 1 bis 10, wobei das Polymerisat P einen zahlenmittleren Teilchendurchmesser ≥ 100 und ≤ 500 nm aufweist.

**12.** Wässrige Dispersion nach einem der Ansprüche 1 bis 11, wobei das Polymerisat P eine Glasübergangstemperatur im Bereich ≥ -35 und ≤ 15 °C aufweist.

**13.** Wässrige Dispersion nach einem der Ansprüche 1 bis 12, wobei das Gewichtsverhältnis von Polymerisat P zum Calcium-Silikat-Hydrat (als Feststoff gerechnet) 1:1 bis 90:1 beträgt.

**14.** Wässrige Dispersion nach einem der Ansprüche 1 bis 13, wobei das Polymerisat P in Form einer wässrigen Polymerisatdispersion eingesetzt wird.

**15.** Wässrige Dispersion nach einem der Ansprüche 1 bis 14, wobei das Calcium-Silikat-Hydrat in Form einer wässrigen Dispersion eingesetzt wird.

**16.** Verfahren zur Herstellung einer wässrigen Dispersion gemäß den Ansprüchen 14 und 15, **dadurch gekennzeichnet, dass** die wässrige Dispersion des Calcium-Silikat-Hydrats bei einer Temperatur ≥ 5 und ≤ 40 °C zur wässrigen Dispersion des Polymerisats P zugegeben und die erhaltene wässrige Dispersion homogen gemischt wird.

**17.** Verfahren zur Herstellung einer Polymerisatpulverzusammensetzung, **dadurch gekennzeichnet, dass** eine wässrige Dispersion gemäß einem der Ansprüche 1 bis 15 einer Trocknung unterzogen wird.

**18.** Verfahren gemäß Anspruch 17, **dadurch gekennzeichnet, dass** eine wässrige Dispersion gemäß einem der Ansprüche 1 bis 15 einer Sprühtrocknung unterzogen wird.

**19.** Polymerisatpulverzusammensetzung, erhältlich nach einem Verfahren gemäß einem der Ansprüche 17 oder 18.

**20.** Verwendung einer wässrigen Dispersion gemäß einem der Ansprüche 1 bis 15 oder einer Polymerisatpulverzusammensetzung gemäß Anspruch 19 als Additiv in wässrigen Formulierungen hydraulisch abbindender Massen.

**21.** Wässrige Formulierungen hydraulisch abbindender Massen enthaltend eine wässrige Dispersion gemäß einem der Ansprüche 1 bis 15 oder eine Polymeriatpulverzusammensetzung gemäß Anspruch 19.

**22.** Pulverförmige hydraulisch abbindende Massen enthaltend eine Polymerisatpulverzusammensetzung gemäß Anspruch 19.

## Claims

1. A cement-free aqueous dispersion comprising in dispersed form particles of a polymer P and particles of a calcium silicate hydrate, where
the polymer P has a number-average particle diameters 10 and ≤ 1000 nm and a glass transition temperature in the range ≥ -55 and ≤ 30°C and is composed in copolymerized form of

| | |
|---|---|
| ≥ 0.1% and ≤ 10% | by weight of at least one hydroxyalkyl acrylate, hydroxyalkyl methacrylate and/or an amide of an α,β-monoethylenically unsaturated $C_3$ to $C_6$ monocarboxylic or $C_4$ to $C_6$ dicarboxylic acid (monomers A), |
| ≥ 0% and ≤ 0.5% | by weight of at least one α,β-monoethylenically unsaturated $C_3$ to $C_6$ monocarboxylic or $C_4$ to $C_6$ dicarboxylic acid (monomers B), |
| ≥ 0% and ≤ 10% | by weight of methyl methacrylate (monomer C), and |
| ≥ 90% and ≤ 99.9% | by weight of at least one further ethylenically unsaturated monomer which is different from the monomers A to C (monomers D), |

the amount of the monomers A to D adding up to 100% by weight, and where the calcium silicate hydrate has a weight-average particle diameters 0.1 and ≤ 100 nm.

2. The aqueous dispersion according to claim 1, where the calcium silicate hydrate has the following average composition:

$$(CaO)_a(X_2O)_b(YO)_cSiO_2(Al_2O_3)_d(H_2O)_e,$$

where

X is sodium and/or potassium,
Y is magnesium, strontium and/or barium, and
a: stands for a value ≥ 0.1 and ≤ 2,
b: stands for a value ≥ 0 and ≤ 0.5,
c: stands for a value ≥ 0 and ≤ 2,
d: stands for a value ≥ 0 and ≤ 1, and
e: stands for a value ≥ 1 and ≤ 6.

3. The aqueous dispersion according to either of claims 1 and 2, where

a: stands for a value ≥ 0.6 and ≤ 1.8,
b: stands for a value ≥ 0 and ≤ 0.2,
c: stands for a value ≥ 0 and ≤ 0.1,
d: stands for a value ≥ 0 and ≤ 0.1, and
e: stands for a value ≥ 1 and ≤ 6.

4. The aqueous dispersion according to any of claims 1 to 3, where the calcium silicate hydrate has been prepared by reacting sodium metasilicate [$Na_2O$ • n $SiO_2$, with n = 1 to 4] with calcium nitrate, acetate, hydroxide, sulfate and/or formate in an aqueous medium.

5. The aqueous dispersion according to claim 4, where the molar Ca/Si ratio in the calcium silicate hydrate is 1:1 to 1:1.6.

6. The aqueous dispersion according to either of claims 4 or 5, where the reaction has been carried out in the presence of an organic comb polymer in solution in the aqueous medium.

7. The aqueous dispersion according to any of claims 1 to 6, where the calcium silicate hydrate has a weight-average particle diameters 5 and ≤ 20 nm.

8. The aqueous dispersion according to any of claims 1 to 7, where the polymer P is composed in copolymerized form of

≥ 2.0% and ≤ 8.0% by weight of at least one monomer A,
≥ 0% and ≤ 0.2% by weight of at least one monomer B,
≥ 0% and ≤ 2.0% by weight of monomer C, and
≥ 92% and ≤ 98% by weight of at least one monomer D.

**9.** The aqueous dispersion according to any of claims 1 to 8, where the monomer A is 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, acrylamide and/or methacrylamide.

**10.** The aqueous dispersion according to any of claims 1 to 9, where the monomers D consist to an extent of ≥ 90% by weight of n-butyl acrylate, 2-ethylhexyl acrylate, ethyl acrylate and/or 1,4-butadiene or mixtures of these monomers with styrene.

**11.** The aqueous dispersion according to any of claims 1 to 10, where the polymer P has a number-average particle diameters 100 and ≤ 500 nm.

**12.** The aqueous dispersion according to any of claims 1 to 11, where the polymer P has a glass transition temperature in the range ≥ -35 and ≤ 15°C.

**13.** The aqueous dispersion according to any of claims 1 to 12, where the weight ratio of polymer P to calcium silicate hydrate (calculated as solids) is 1:1 to 90:1.

**14.** The aqueous dispersion according to any of claims 1 to 13, where the polymer P is used in the form of an aqueous polymer dispersion.

**15.** The aqueous dispersion according to any of claims 1 to 14, where the calcium silicate hydrate is used in the form of an aqueous dispersion.

**16.** A process for preparing an aqueous dispersion according to claims 14 and 15, wherein the aqueous dispersion of the calcium silicate hydrate is added at a temperature ≥ 5 and ≤ 40°C to the aqueous dispersion of the polymer P and the resulting aqueous dispersion is homogeneously mixed.

**17.** A process for preparing a polymer powder composition, wherein an aqueous dispersion according to any of claims 1 to 15 is subjected to drying.

**18.** The process according to claim 17, wherein an aqueous dispersion according to any of claims 1 to 15 is subjected to spray drying.

**19.** A polymer powder composition obtainable by a process according to either of claims 17 and 18.

**20.** The use of an aqueous dispersion according to any of claims 1 to 15 or of a polymer powder composition according to claim 19 as an additive in aqueous formulations of hydraulically setting compositions.

**21.** An aqueous formulation of hydraulically setting compositions, comprising an aqueous dispersion according to any of claims 1 to 15 or a polymer powder composition according to claim 19.

**22.** A hydraulically setting composition in powder form, comprising a polymer powder composition according to claim 19.

## Revendications

1. Dispersion aqueuse exempte de ciment, contenant sous forme dispersée des particules d'un polymère P et des particules d'un hydrate de silicate de calcium, dans laquelle
le polymère P présente un diamètre de particule moyen en nombre ≥ 10 et ≤ 1 000 nm et une température de transition vitreuse dans la plage ≥ -55 et ≤ 30 °C, et est constitué sous forme copolymérisée par
≥ 0,1 et ≤ 10 % en poids d'au moins un acrylate d'hydroxyalkyle, un méthacrylate d'hydroxyalkyle et/ou un amide d'un acide monocarboxylique en $C_3$ à $C_6$ ou dicarboxylique en $C_4$ à $C_6$ $\alpha,\beta$-monoéthyléniquement insaturé (monomères A),
≥ 0 et ≤ 0,5 % en poids d'au moins un acide monocarboxylique en $C_3$ à $C_6$ ou dicarboxylique en $C_4$ à $C_6$ $\alpha,\beta$-monoéthyléniquement insaturé (monomères B),
≥ 0 et ≤ 10 % en poids de méthacrylate de méthyle (monomère C), et
≥ 90 et ≤ 99,9 % en poids d'au moins un autre monomère éthyléniquement insaturé, qui diffère des monomères A à C (monomères D),
la somme des quantités des monomères A à D étant de 100 % en poids, et dans laquelle
l'hydrate de silicate de calcium présente un diamètre de particule moyen en poids ≥ 0,1 et ≤ 100 nm.

2. Dispersion aqueuse selon la revendication 1, dans laquelle l'hydrate de silicate de calcium présente la composition moyenne suivante :

$$(CaO)_a(X_2O)_b(YO)_cSiO_2(Al_2O_3)_d(H_2O)\ e$$

dans laquelle

X représente sodium et/ou potassium,
Y représente magnésium, strontium et/ou baryum, et
a : représente une valeur 0,1 et ≤ 2,
b : représente une valeur 0 et ≤ 0,5,
c : représente une valeur 0 et ≤ 2,
d : représente une valeur 0 et ≤ 1, et
e : représente une valeur 1 et ≤ 6.

3. Dispersion aqueuse selon l'une quelconque des revendications 1 ou 2, dans laquelle

a : représente une valeur 0,6 et ≤ 1,8,
b : représente une valeur 0 et ≤ 0,2,
c : représente une valeur 0 et ≤ 0,1,
d : représente une valeur 0 et ≤ 0,1, et
e : représente une valeur 1 et ≤ 6.

4. Dispersion aqueuse selon l'une quelconque des revendications 1 à 3, dans laquelle l'hydrate de silicate de calcium a été fabriqué par mise en réaction de métasilicate de sodium [$Na_2O \cdot n\ SiO_2$, avec n = 1 à 4] avec du nitrate, de l'acétate, de l'hydroxyde, du sulfate et/ou du formiate de calcium dans un milieu aqueux.

5. Dispersion aqueuse selon la revendication 4, dans laquelle le rapport molaire Ca/Si dans l'hydrate de silicate de calcium est de 1:1 à 1:1,6.

6. Dispersion aqueuse selon l'une quelconque des revendications 4 ou 5, dans laquelle la réaction a été réalisée en présence d'un polymère en peigne organique dissous dans le milieu aqueux.

7. Dispersion aqueuse selon l'une quelconque des revendications 1 à 6, dans laquelle l'hydrate de silicate de calcium présente un diamètre de particule moyen en poids ≥ 5 et ≤ 20 nm.

8. Dispersion aqueuse selon l'une quelconque des revendications 1 à 7, dans laquelle le polymère P est constitué sous forme polymérisée par
≥ 2,0 et ≤ 8,0 % en poids d'au moins un monomère A,
≥ 0 et ≤ 0,2 % en poids d'au moins un monomère B,
≥ 0 et ≤ 2,0 % en poids de monomère C et

≥ 92 et ≤ 98 % en poids d'au moins un monomère D.

**9.** Dispersion aqueuse selon l'une quelconque des revendications 1 à 8, dans laquelle le monomère A est l'acrylate de 2-hydroxyéthyle, le méthacrylate de 2-hydroxyéthyle, l'acrylate de 2-hydroxypropyle, le méthacrylate de 2-hydroxypropyle, l'acrylate de 3-hydroxypropyle, le méthacrylate de 3-hydroxypropyle, l'acrylamide et/ou le méthacrylamide.

**10.** Dispersion aqueuse selon l'une quelconque des revendications 1 à 9, dans laquelle les monomères D sont constitués de ≥ 90 % en poids d'acrylate de n-butyle, d'acrylate de 2-éthylhexyle, d'acrylate d'éthyle et/ou de 1,4-butadiène ou de mélanges de ces monomères avec du styrène.

**11.** Dispersion aqueuse selon l'une quelconque des revendications 1 à 10, dans laquelle le polymère P présente un diamètre de particule moyen en nombre ≥ 100 et ≤ 500 nm.

**12.** Dispersion aqueuse selon l'une quelconque des revendications 1 à 11, dans laquelle le polymère P présente une température de transition vitreuse dans la plage ≥ -35 et ≤ 15 °C.

**13.** Dispersion aqueuse selon l'une quelconque des revendications 1 à 12, dans laquelle le rapport en poids entre le polymère P et l'hydrate de silicate de calcium (calculé sous forme solide) est de 1:1 à 90:1.

**14.** Dispersion aqueuse selon l'une quelconque des revendications 1 à 13, dans laquelle le polymère P est utilisé sous la forme d'une dispersion aqueuse de polymère.

**15.** Dispersion aqueuse selon l'une quelconque des revendications 1 à 14, dans laquelle l'hydrate de silicate de calcium est utilisé sous la forme d'une dispersion aqueuse.

**16.** Procédé de fabrication d'une dispersion aqueuse selon les revendications 14 et 15, **caractérisé en ce que** la dispersion aqueuse de l'hydrate de silicate de calcium est ajoutée à une température ≥ 5 et ≤ 40 °C à la dispersion aqueuse du polymère P, et la dispersion aqueuse obtenue est mélangée de manière homogène.

**17.** Procédé de fabrication d'une composition de poudre polymère, **caractérisé en ce qu'**une dispersion aqueuse selon l'une quelconque des revendications 1 à 15 est soumise à un séchage.

**18.** Procédé selon la revendication 17, **caractérisé en ce qu'**une dispersion aqueuse selon l'une quelconque des revendications 1 à 15 est soumise à un séchage par pulvérisation.

**19.** Composition de poudre polymère, pouvant être obtenue par un procédé selon l'une quelconque des revendications 17 ou 18.

**20.** Utilisation d'une dispersion aqueuse selon l'une quelconque des revendications 1 à 15 ou d'une composition de poudre polymère selon la revendication 19 en tant qu'additif dans des formulations aqueuses de masses à prise hydraulique.

**21.** Formulations aqueuses de masses à prise hydraulique contenant une dispersion aqueuse selon l'une quelconque des revendications 1 à 15 ou une composition de poudre polymère selon la revendication 19.

**22.** Masses à prise hydraulique sous forme de poudre, contenant une composition de poudre polymère selon la revendication 19.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 201026155 A
- WO 201126720 A
- WO 201126723 A
- EP 11163464 PCT
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- EP 812872 A


### In der Beschreibung aufgeführte Nicht-Patentliteratur


- **T.G. FOX.** *Bull. Am. Phys. Soc.,* 1956, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- Ullmann's Encyclopedia of Industrial Chemistry. Verlag Chemie, 1992, 169
- Encyclopedia of Polymer Science and Engineering. 1987, vol. 8, 659 FF
- **D.C. BLACKLEY.** *High Polymer Latices,* 1966, vol. 1, 35 FF
- **H. WARSON.** The Applications of Synthetic Resin Emulsions. 1972, 246 FF
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- McCutcheon's, Emulsifiers & Detergents. MC Publishing Company, 1989
- **J. BRANDRUP ; E.H. IMMERGUT.** Polymerhandbook. John Wiley & Sons, 1989, 133-141
- Analytical Ultracentrifugation of Nanoparticles. **H. CÖLFEN.** Encyclopedia of Nanoscience and Nanotechnology. American Scientific Publishers, 2004, 67-88